# EUROPEAN PATENT APPLICATION

(11) **EP 4 349 555 A1**
(43) Date of publication of application: **10.04.2024**
(21) Application number: 22306490.8
(22) Date of filing: 05.10.2022
(51) Int. Cl.: B28B 17/00, B28B 19/00, G01B 11/02, G01B 11/06, G06T 7/00, G06T 7/62, C04B 38/10

(54) **METHOD OF FORMING A GYPSUM PANEL, METHOD OF ANALYZING A GYPSUM CORE AND GYPSUM CORE ANALYSIS TOOL**

(71) Applicant: SAINT-GOBAIN PLACO, 92400 Courbevoie (FR)
(72) Inventor: LESPIAT, Remi, MALVERN, 19355 (US); NIZNIK, Arkadiusz, 44-100 GLIWICE (PL); JAFFEL, Hamouda, 92400 COURBEVOIE (FR); DECABOOTER, Célia, 92400 COURBEVOIE (FR); GAO, Zhe, SHANGHAI, 200245 (CN)
(74) Representative: Saint-Gobain Recherche

(57) **Abstract**

The present disclosure relates generally to methods of analyzing and manufacturing gypsum panels (100), for example suitable for use as building surface products. The present disclosure relates more particularly to a method of forming a gypsum panel (100). The method includes forming a porous slurry layer (144) on a receiving surface (102) using a plurality of operating parameters, and allowing the porous slurry layer (144) to set to form a gypsum core (104) of a gypsum panel (100). The panel is then cut (e.g. by a router 128) to form a cut surface (108) that extends through the gypsum core (104), and an image of a region of the cut surface (108) is captured by a camera (152). The image is analyzed to identify bubbles intersecting the cut surface (108). A measure of bubble contact in the gypsum core (104) is then calculated from the identified bubbles in the image. Based on the measure of bubble contact, an operating parameter used for forming the porous slurry layer (144) is modified.

## Description

### Technical field

The present disclosure relates generally to methods of analysing and manufacturing gypsum panels, for example, suitable for use as building surface products. The present disclosure relates more particularly to a method of forming a gypsum panel, and a method of analysing a gypsum core.

### Technical background

The properties of gypsum make it highly suitable for use in building surface products such as gypsum panels. Gypsum is a plentiful material and is generally inexpensive. Further, through successive steps of dehydration and rehydration, gypsum can be cast, moulded, or otherwise formed to useful shapes. For example, many interior walls are formed using gypsum panels that include a set gypsum core sandwiched between facing sheets.

To reduce the weight of gypsum panels, the gypsum core within the panel often includes a distribution of bubbles. The bubbles displace a certain percentage of the solid material of the panel, thereby making the panel lighter and easier to handle. While the bubbles can limit certain performance properties of the gypsum panel, such as the mechanical strength of the panel, it is possible to control the addition of bubbles in the gypsum core such that the advantage in weight reduction outweighs any undesired consequences that the bubbles may have on the performance properties of the gypsum panel. For example, controlling the size of the bubbles and the overall density of the gypsum panel can both impact the performance properties of the panel.

The present inventors have determined, however, that these characteristics of the bubbles are not determinative of the performance of the gypsum panel, and that other characteristics of the bubbles within the gypsum core can impact performance.

### Summary of the invention

In one aspect, the present disclosure provides a method of forming a gypsum panel, the method comprising:
- forming a porous slurry layer on a receiving surface using a plurality of operating parameters, wherein forming the porous slurry layer includes:
- combining a stucco and water in a mixer,
- adding foam to the stucco material and water,
- stirring the stucco, water, and foam in the mixer to form a slurry, and
- distributing the slurry over the receiving surface;
- allowing the porous slurry layer to set to form a gypsum core of a gypsum panel;
- forming a cut surface that extends through the gypsum core;
- capturing an image of a region of the cut surface;
- analyzing the image to identify bubbles intersecting the cut surface;
- determining a measure of bubble contact in the gypsum core based on the identified bubbles in the image; and
- optionally, based on the measure of bubble contact, modifying a first operating parameter of the plurality of operating parameters for forming the porous slurry layer on the receiving surface.

In another aspect, the disclosure provides a method of analyzing a gypsum core, the method comprising:
- receiving an image of a region of a cut surface of the gypsum core;
- identifying bubbles in a portion of the image;
- identifying a set of contacting bubbles each of which is in contact with at least one other bubble; and
- determining, based on the set of bubbles, a measure of bubble contact in the gypsum core.

In another aspect, the disclosure provides a non-transitory computer-readable medium having stored thereon program instructions that upon execution by a processor, cause performance of a set of operations to perform the method of analyzing a gypsum core according to the disclosure.

In another aspect, the disclosure provides a computing device comprising: a processor; and a non-transitory computer-readable medium according to the disclosure.

In another aspect, the disclosure provides a gypsum core analysis tool comprising: a camera configured to capture an image of a region of a cut surface of a gypsum core; and a computing device according to the disclosure.

Additional aspects of the disclosure will be evident from the disclosure herein.

### Brief description of drawings

The accompanying drawings are included to provide a further understanding of the methods and devices of the disclosure and are incorporated in and constitute a part of this specification. The drawings are not necessarily to scale, and sizes of various elements may be distorted for clarity. The drawings illustrate one or more embodiment(s) of the disclosure, and together with the description serve to explain the principles and operation of the disclosure.
FIG. 1 is a schematic depiction of a mixer used in a process in accordance with an embodiment of the disclosure.
FIG. 2 is a schematic depiction of a system for forming a gypsum panel in accordance with an embodiment of the disclosure.
FIG. 3 is a schematic depiction of a method of forming a cut edge in a gypsum panel in accordance with an embodiment of the disclosure.
FIG. 4 is a schematic depiction of a gypsum panel characterization tool in accordance with an embodiment of the disclosure.
FIGS. 5A-5C are schematic depictions of an analysis of an image in accordance with an embodiment of the disclosure.
FIG. 6 is a schematic depiction of an analysis of an image in accordance with an embodiment of the disclosure.

### Detailed description of embodiments

As described above, the present inventors have determined that bubble size and gypsum density are not the only characteristics related to bubbles that can influence performance parameters of gypsum panels.

Accordingly, one aspect of the disclosure is a method of forming a gypsum panel. The method includes forming a porous slurry layer on a receiving surface using a plurality of operating parameters. Forming the porous slurry layer includes combining a stucco and water in a mixer, adding foam to the stucco and water, stirring the stucco material, water, and foam in the mixer to form a slurry, and distributing the slurry over the receiving surface. The porous slurry layer is then allowed to set to form a gypsum core of a gypsum panel. A cut edge is then formed that extends across the gypsum core. An image is then captured of a region of the cut surface. The image is analysed to identify bubbles in the gypsum core that intersect the cut surface. A measure of bubble contact in the gypsum core is then determined based on the identified bubbles in the image. Based on the measure of bubble contact, a first operating parameter, of the plurality of operating parameters for forming the porous slurry layer on the receiving surface, is modified.

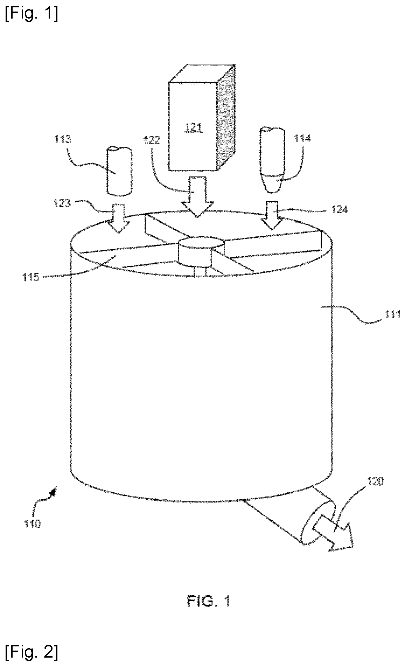

FIGS. 1-6 illustrate an embodiment of such a method. FIG. 1 shows a mixer 110 for forming a slurry 120, which is subsequently dispersed on a forming table and dried to form a gypsum panel, as explained in more detail below. The mixer 110 receives stucco 122 through a conduit 112, or another feed source, and water 123 through a separate conduit 113. Various additives can also be added to the slurry, either along with the stucco material, along with the water, or independently into the mixer. The mixer 110 rotates, at either a fixed or adjustable speed, to combine the stucco material 122 and water 123 into a slurry that may be spread to form the shape of a gypsum panel. In some embodiments, the mixer 110 includes an agitator 115 with one or more blades or paddles that stir the slurry. Further, in some embodiments, the entire container 111 of the mixer 110 rotates. Thus, the rotation of the mixer may refer to either an agitator within the mixer or the container itself.

The term "stucco" as used herein refers to a calcium sulphate material that is largely (i.e., at least 50 wt.%, desirably at least 75 wt.%) calcium sulphate hemihydrate, although typical real-world samples also include calcium sulphate anhydrate, calcium sulphate dihydrate (known as "gypsum") and various impurities. Stucco is typically produced by calcining a raw gypsum material to convert the dihydrate gypsum to hemihydrate; accordingly, it is also known in the art as "calcined gypsum" or "calcinated gypsum."

In some embodiments, the stucco that is added to the mixer has been prepared for use as plaster by grinding and calcining at relatively low temperature (such as from about 120 to 170° C.), and around atmospheric pressure. Combining the stucco with water forms a slurry which is then spread to the desired shape. The slurry is then allowed to set by recrystallization so as to form a panel.

In addition to the stucco 122 and water 123, foam 124 is also added to mixer 110 through a nozzle 114. The inclusion of foam 124 adds bubbles to the slurry, at least some of which remain in the finished gypsum panel. The bubbles generated by the foam reduce the density of the finished gypsum panel, thereby providing a lighter product that is easier to ship, easier to handle during installation, and reduces the overall weight of the finished construction. On the other hand, the size and distribution of the bubbles also influence performance properties of the core of the produced gypsum panel, and thus choosing an amount of foam may require a balance between competing characteristics and properties.

As the person of ordinary skill in the art will appreciate, the foam is provided as an aqueous surfactant that has been aerated (or otherwise had gas bubbles formed in it). A variety of surfactants are known in the art for providing such foams. The surfactant is typically one or more of an alkyl sulphate (e.g., lauryl sulphate) and an alkyl ether sulphate (e.g., ethoxylated lauryl alcohol sulphate), see, e.g., U54156615, U55085929, U55116671, US5643510, US6706128, US7033431, US7220373.

In some embodiments, the foam is produced using a foam generator that is upstream of the nozzle 114. For example, foam-generating surfactant is diluted with water then combined with compressed air in the foam generator. The resulting foam is then injected into the mixer through nozzle 114. In some embodiments, the foam generator is a static foam generator, for example, including a tube filled with a permeable porous medium, such as packed beads of fritted glass or ceramic, with controlled pore space. The foam is then produced by injecting a blend of foaming agent, water, and air into the tube. In some embodiments, the structure of the produced foam may be controlled by regulating the applied back pressure on the tube.

In other embodiments, the foam generator is a dynamic foam generator, for example, including internal rotating mechanisms to mix the water, air, and foaming agent thoroughly to produce foam. In some cases, the rotating blade may be equipped with mixing chambers allowing the nucleation of foam bubbles.

In some embodiments, additives are added to the slurry during the manufacturing process. Such additives may include retarders, accelerators, fibrous materials, and starch. These additives may be added at various stages in the mixing process, such as through independent inlets, or maybe added to the water, stucco, or foam before they are added to the mixer.

While the mixer 110 shown in FIG. 1 includes a single chamber that receives all of the water, stucco and foam added to the slurry, in other embodiments, the mixer includes multiple chambers, which may receive different quantities of the components of the slurry and may process the slurry in different ways. For example, in some embodiments, the mixer includes various chambers that provide the slurry at different densities. Moreover, while FIG. 1 shows the mixer receiving each of the various components from a single source, in other embodiments, the mixer is configured to receive at least one of the components from multiple sources, for example through different conduits.

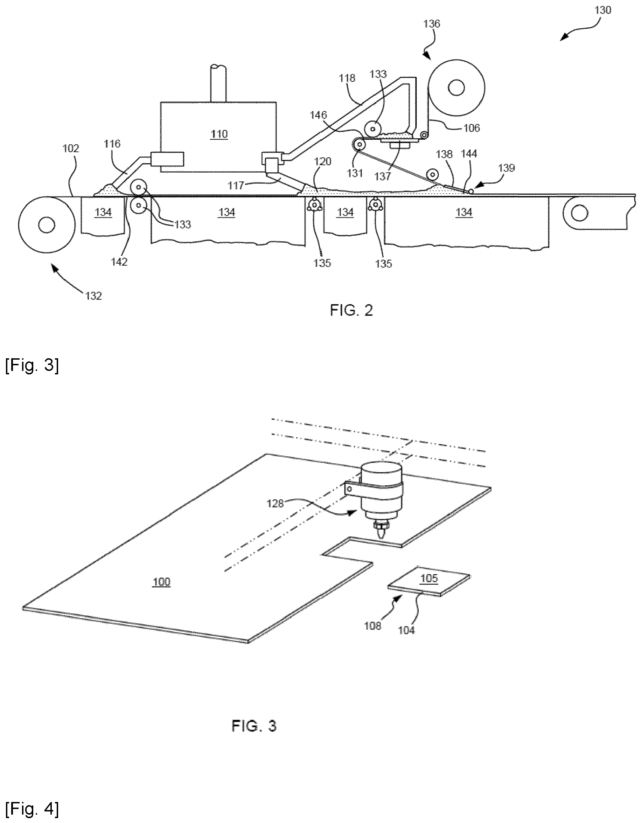

FIG. 2 schematically depicts a system for producing a gypsum panel according to an example embodiment. System 130 includes a first supply roll 132 of a sheet of material that forms a lower facing sheet 102 of the finished gypsum panel. The facing sheet 102 may be formed of a fibrous mat, a paper, or a film. In some embodiments, the facing sheet is configured to be saturated with the gypsum slurry, while in other embodiments, the slurry coats the upper (or inner) surface of the facing sheet.

The lower facing sheet 102 is unwound from the first supply roll 132 and drawn across several forming tables 134 of system 130. In some embodiments, after being removed from the supply roll, the lower facing sheet is creased or otherwise processed to include an appropriate geometry at the edge of the facing sheet to form the sides of the gypsum panel.

As the lower facing sheet 102 is drawn across the forming tables 134, a first dense slurry layer 142 is deposited onto the upper surface of lower facing sheet 102. A first slurry outlet 116 of mixer 110 dispenses the dense slurry onto the upper surface of lower facing sheet 102 and a pair of roll coaters 133 spread and apply the dense slurry to form the first dense slurry layer 142. In some embodiments, where the lower facing sheet is porous, the roll coaters 133 may also press the slurry into the openings within the facing sheet so as to penetrate the facing sheet and cover both the interior and exterior surfaces thereof.

The lower facing sheet 102 proceeds across forming tables 134 to a second slurry outlet 117 where aerated slurry 120 from mixer 110 is applied onto the first dense slurry layer 142 on the lower facing sheet 102. The aerated slurry 120 is less dense than first dense slurry layer 142 and includes a greater fraction of bubbles. Vibrators 135 positioned between adjacent forming tables 134 help distribute the aerated slurry 120 evenly across the first dense slurry layer 142 to form a porous slurry layer 144 over the lower facing sheet 102. Upon setting, the porous slurry layer 144 becomes the gypsum core 104 of the finished gypsum panel 100 as illustrated on FIG. 3.

Concurrently, an upper facing sheet 106 is unwound from a second supply roll 136 and guided by rollers 131 onto a separate forming table 137. Another supply of dense slurry is deposited on the upper facing sheet 106 through a third slurry outlet 118 at the separate forming table 137. Additional roll coaters 133 then spread and apply the dense slurry to form a second dense slurry layer 146 on the upper facing sheet 106. The upper facing sheet 106 is flipped with another guide roller 131 such that the second dense slurry layer 146 faces the lower facing sheet 102 and porous slurry layer 144 deposited thereon.

The coated upper facing sheet 106 is then directed to the upper surface of porous slurry layer 144 and secured to the porous slurry layer at a forming station. The forming station includes a forming plate 138 with an associated hinge 139. The forming station aids in pressing the various layers together to create a smooth gypsum panel with a uniform thickness.

Various operating parameters influence the characteristics of the gypsum core that is formed from the porous slurry layer. For example, the weight percent of each of the constituents of the slurry influence the characteristics of the gypsum core. For instance, the volume of bubbles within the set gypsum core may be determined, in part, based on the quantity of foam that is added to the slurry.

Likewise, the particular makeup and parameters of each of the components of the slurry will also influence the characteristics of the gypsum core. For example, with respect to the foam, the density of the foam, the range of bubble size of the foam, the median bubble size of the foam, the amount of surfactant, and the composition of the surfactant may all influence the characteristics of the bubbles in the gypsum core.

Similarly, the composition of the stucco and the mineral content of the water may both influence the characteristics of the gypsum core. Moreover, any additives that are included in the slurry may also influence the bubbles in the gypsum core. For example, the amount and composition of any fluidizers, retarders or set modifiers may influence bubble retention, movement, and coalescence in the gypsum core.

The mechanical operating parameters used to make the slurry may also impact the characteristics of the gypsum core. For example, if the foam is injected into the mixer, the foam injection pressure, the number of nozzles used to inject the foam, and the shape of the nozzle(s) used to inject the foam can all influence the bubbles in the slurry, which may also influence the bubbles in the set gypsum core. Likewise, the manner in which the slurry is mixed, such as the rotational speed of the mixer, the shape of any agitators used in the mixer, and dynamics of the agitators may influence the coalescence and collapse of bubbles in the slurry.

Further still, the parameters used for distributing the slurry over the forming table or other receiving surface may also influence bubbles in the gypsum core. For example, the dynamics of the slurry as it hits the receiving surface can influence the quantity, size and shape of bubbles that collapse or are forced out of the slurry. Likewise, if the receiving surface is vibrated as the slurry is distributed thereon, the speed or amplitude of the vibration can influence the retention of bubbles in the slurry.

Once the shape of the slurry layers and facing sheets are established, the gypsum is allowed to set to form the gypsum panel 100. FIG. 3 shows a segment 105 of a gypsum panel 100 that is cut to form a cut edge 108 that extends through the gypsum core 104 of gypsum panel 100. In the illustrated embodiment, the gypsum panel 100 has been removed from the manufacturing line and taken to a cutting tool in the form of a router table that includes a router 128. In other embodiments, the cutting tool may include a CNC machine, saw, water jet, laser, wire, blade or other cutting tool. Further, in other embodiments, the cut edge may be formed as part of the gypsum panel manufacturing process, for example, along an edge of the gypsum panel. In such an embodiment, the cut edge may be formed without removing the gypsum panel from the manufacturing line. Such a cut edge may be formed where the gypsum is still wet, such as before a dryer, or may be formed after the dryer.

FIG. 3 shows the cut edge 108 as extending across the thickness of the segment 105 of gypsum panel 100, such that the cut edge 108 is perpendicular to the plane of the gypsum core 104. In other embodiments, the cut edge may have a different configuration. For example, in some embodiments, rather than cutting across the gypsum panel, the cut edge is formed by removing layers at the front face or rear face of the gypsum panel, such that the cut edge is parallel to the gypsum core.

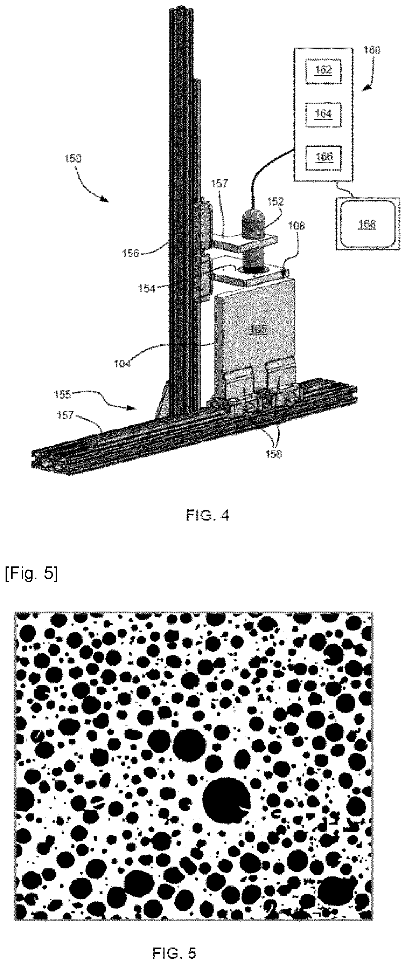

The cut edge 108 of the gypsum panel 100 is then analysed according to a method of analysing a gypsum core in accordance with an embodiment of the disclosure. As explained in more detail below, an embodiment of such a method is shown in FIGS. 4-6 and uses a gypsum core analysis tool 150, as shown in FIG. 4. As explained further below, the gypsum core analysis tool 150 analyses an image of the cut edge 108 to identify bubbles in the gypsum core and the distribution of the bubbles in the gypsum core. The gypsum core analysis tool 150 also identifies bubbles within the core that are in contact and calculates a measure of bubble contact in the gypsum core.

The inventors have identified that the amount of bubble contact within the gypsum core can influence various operating parameters of the gypsum core, such as mechanical properties, fire rating and acoustic properties. For example, bubbles within the gypsum core that are in contact may promote fracturing through the gypsum core, as the fracture can propagate through the bubbles that are in contact. Bubbles that are in contact with one another may have a similar influence on preventing the spread of fire and acoustic performance.

The term "bubble" as used herein refers to an open space within the gypsum core that has an identifiable boundary to distinguish the area or volume of the bubble from the gypsum material and from neighbouring bubbles. Thus, an open space within the gypsum core may be formed by a single bubble or may be formed by two or more bubbles that are in contact. Bubbles in contact with one another may have started to coalesce but still be identifiable as individual elements based on the shape of the open space within the gypsum. Accordingly, within a gypsum core there may be many bubbles, some of which are in contact with one another.

In certain embodiments, based on the measure of bubble contact in the gypsum core, one or more of the operating parameters used for forming the porous slurry layer on the receiving surface is modified in order to influence the measure of bubble contact in subsequent gypsum panels. For example, in some embodiments, after modifying one or more of the parameters based on the measure of bubble contact, a second gypsum panel is manufactured that has a different measure of bubble contact.

In certain embodiments of the method of forming a gypsum panel, the modified operating parameter is the weight percent of a component of the slurry. For example, in some embodiments, the modified operating parameter is the weight percent of water added to the slurry. In other embodiments, the modified operating parameter is the weight percent of stucco added to the slurry. Further, in some embodiments, the modified operating parameter is the weight percent of foam added to the slurry.

In certain embodiments of the method of forming a gypsum panel, the modified operating parameter is a property of the foam. For example, in some embodiments, the modified operating parameter is the density of the foam. Similarly, in some embodiments, the modified operating parameter is a range of bubble size within the foam, or a median bubble size of the foam. Further, in some embodiments, the modified operating parameter is the type of surfactant(s) in the foam or the weight percent of surfactant in the foam.

In certain embodiments of the method of forming a gypsum panel, the modified operating parameter is a mechanical operating parameter used to make the slurry. For example, in some embodiments, the modified operating parameter is injection pressure of the foam as it is added to the mixer. In other embodiments, the modified operating parameter is the shape of a nozzle, or the nozzles used to inject the foam into the mixer. In some embodiments, the modified operating parameter is the location within the panel fabrication system where foam is added. Further still, in some embodiments, the modified operating parameter is rotation speed of the mixer, such as the rotational speed of an agitator in the mixer or the mixing chamber itself.

In certain embodiments of the method of forming a gypsum panel, the modified operating parameter relates to one or more additives provided in the slurry. For example, in some embodiments, the modified operating parameter is a weight percent of an additive that is added to the slurry, such as an accelerator, retarder, dispersant, water repellent, fluidizer, set modifier, fire-resistance additive, biocide, or pH modifier.

The person of ordinary skill in the art is familiar with such additives and their use in the manufacture of gypsum boards. Examples of accelerators include a compound comprising calcium sulphate dihydrate and sugar, potassium sulphate, organic phosphonic compounds, and a phosphate-containing compounds. Examples of retarders include citric acid and polyamides. Examples of dispersants include polycarboxylate dispersant, for example including a polycarboxylic ether dispersant, polyphosphate dispersant, lignosulfonate dispersant, naphthalene sulfonate dispersants such beta-naphthalene sulfonate, naphthalene sulfonate formaldehyde condensate, and sodium naphthalene sulphate formaldehyde condensate. Examples of water repellents include wax, siloxane, and silicone-based materials. Examples of fluidizers include polycarboxylated ethers and alkali derivatives of naphthalene sulfonate formaldehyde condensate. Examples of set modifiers include potassium sulfate.and boric acid. Examples of fire-resistance additives include glass fibers and vermiculite. Examples of biocides include isothiazolinones, 2-((hydroxymethyl)amino)ethanol and tributyltin benzoate. Examples of pH modifiers include various acids and basis.

In certain embodiments of the method of forming a gypsum panel, the modified operating parameter is related to the distribution of slurry over the receiving surface. For example, in some embodiments, the modified operating parameter is the shape or size of the outlet of the slurry. In other embodiments, the modified operating parameter is the elevation of the outlet of the slurry above the receiving surface. Further, in some embodiments, the modified operating parameter is a vibration speed of the receiving surface.

In another aspect, the disclosure provides a method of analysing a gypsum core. The method includes receiving an image of a region of a cut surface of the gypsum core and identifying bubbles in a portion of the image. The method also includes determining a set of contacting bubbles in the image, each of which is in contact with at least one other bubble. Further, based on the set of contacting bubbles, a measure of bubble contact in the gypsum core is determined.

Various methods may be used to identify the bubbles within the gypsum core. With an isolated bubble, the boundary of the bubble is formed by the gypsum material that completely surrounds the bubble. For bubbles that are in contact, a portion of the boundary may be formed by the gypsum material, while the boundary where the bubbles are in contact may be determined using an algorithm. For example, in some embodiments, a watershed algorithm may be used to segment bubbles that are in contact with one another and define a boundary where the bubbles contact each other. Such a watershed algorithm is well known and described, for example, in Pierre Soille and Luc M. Vincent "Determining watersheds in digital pictures via flooding simulations", Proc. SPIE 1360, Visual Communications and Image Processing '90: Fifth in a Series, (1 September 1990) as well as in L. Vincent and P. Soille, "Watersheds in digital spaces: an efficient algorithm based on immersion simulations," in IEEE Transactions on Pattern Analysis and Machine Intelligence, vol. 13, no. 6, pp. 583-598, June 1991, each of which is hereby incorporated herein by reference in its entirety.

In some embodiments, the bubbles that are identified by the gypsum core analysis tool have a width (e.g., diameter) of at least 50 µm. Accordingly, in some embodiments, the bubbles are primarily those resulting from the inclusion of foam or other air entrainment into the slurry, while small spaces formed by water evaporation or other phenomena are excluded.

In certain embodiments of the method of analysing a gypsum core, the analysis includes identifying at least 500 bubbles in the gypsum core, e.g., at least 1000 bubbles, e.g., at least 2000 bubbles, e.g., at least 5000 bubbles. The bubbles that are identified may be provided in a single image, or maybe provided in several images of the gypsum core.

Such a method is shown in FIGS. 4-6. FIG. 4 schematically illustrates the use of a gypsum core analysis tool 150 that is analysing the gypsum core 104 along the cut edge 108 of gypsum panel 100. Gypsum core analysis tool 150 includes a camera 152, a light source 154 and a frame 155 configured to hold the camera 152 in an orientation to view a segment 105 of gypsum panel 100 with the cut edge 108 facing the camera 152. The frame 155 includes a rail 156 and a mount 157 for securing the camera to the first rail 156. The rail 156 allows the position of camera 152 to be adjusted with respect to the segment 105 of gypsum panel 100. Frame 155 also includes a pair of clips 158 configured to secure the segment 105 of gypsum panel 100 in place. In other embodiments, the gypsum core analysis tool is not configured to hold any portion of a gypsum panel, and instead is configured to position the camera in a location with visual access of a gypsum panel, for example along a manufacturing line.

Fig. 4 also includes a schematic representation of a computing device 160 included in the gypsum core analysis tool 150 that includes a non-transitory computer-readable medium with program instructions stored thereon for performing the method of the disclosure. Computing device 160 includes a processor 162, a memory 164, and a network interface 166.

Processor 162 of computing device 160 includes computer processing elements, e.g., a central processing unit (CPU), an integrated circuit that performs processor operations, a digital signal processor (DSP), or a network processor. In some embodiments, the processor includes register memory that temporarily stores instructions being executed and corresponding data, as well as cache memory that temporarily stores performed instructions. Memory 164 is a computer-usable memory, e.g., random access memory (RAM), read-only memory (ROM), or non-volatile memory such as flash memory, solid state drives, or hard-disk drives. In certain embodiments, memory 164 stores program instructions that are executable by processor 162 for carrying out the methods and operations of the disclosure. Network interface 166 provides digital communication between computing device 160 and other computing systems or devices. In some embodiments, the network interface operates via a physical wired connection, such as an ethernet connection. In other embodiments, the network interface communicates via a wireless connection, e.g., IEEE 802.11 (Wifi) or BLUETOOTH. Other communication conventions are also possible.

While computing device 160 of gypsum core analysis tool 150 is disposed within the tool housing, in other embodiments, the computing device is separate from the housing. For example, in some embodiments, the computing device is part of a smartphone, tablet or notebook computer. Further, while computing device 160 is a client device, i.e., a device actively operated by the user, in other embodiments, the computing device is a server device, e.g., a device that provides computational services to a client device. Moreover, other types of computational platforms are also possible in embodiments of the disclosure.

FIG. 4 shows the gypsum core analysis tool 150 while capturing an image of a region of the cut edge 108 of gypsum panel 100. During operation, light source 154 is activated by computing device 160 to illuminate the region of the cut edge 108. While the region of the cut edge 108 is illuminated by light source 154, the camera 152 captures an image of the region of the cut edge 108. In some embodiments, the region of the cut edge is defined as the portion of the surface that is within the field of view of the camera and surrounds an optical axis of the camera. In other embodiments, the region corresponds to a portion of the field of view of the camera. Still in other embodiments, the region extends beyond the field of view of the camera.

The camera may include any of a variety of different image sensors, as will be appreciated by those of ordinary skill in the art, such as a charge-coupled device (CCD) or a complementary metal-oxide-semiconductor (CMOS) sensor. In other embodiments, the image may be captured by another tool. For example, in some embodiments, a tool may be used to capture a three-dimensional image of the gypsum core, such as an X-ray tomography device.

In some embodiments, the light source includes one or more of any of a variety of different lighting elements. For example, in certain embodiments, the light source includes a light emitting diode (LED). The LED may be part of an LED element that includes a plurality of LEDs. Moreover, the term LED as used herein includes conventional LEDs, organic light emitting diodes (OLEDs) and quantum dot LEDs. In other embodiments, the light source may be in the form of a lamp, such as an incandescent, fluorescent, or halogen bulb. Still, in other embodiments, the light source may be in the form of another lighting element, such as a laser.

Further, in some embodiments, the light source is a ring light that surrounds the optical axis of the camera. In some embodiments, the ring light is formed by a plurality of individual lighting elements, such as LEDs, that surround the optical axis. In other embodiments, the ring light is formed by a single ring-shaped light source that surrounds the optical axis.

The image captured by the camera 152 is received by computing device 160, which analyses the image to determine characteristics of the bubbles in the gypsum core 104 of gypsum panel 100. In some embodiments, the lighting and camera are configured to provide an image to the computing device where the portions of the image that represent gypsum material at the surface of the cut edge and portions of the image that represent bubbles intersecting the surface of the cut edge are already identified, for example white representing gypsum material and black representing bubbles. In other embodiments, the computing device initially analyses the image to identify the portions of the image that correspond to gypsum material at the surface of the cut edge and portions of the image that correspond to bubbles intersecting the surface of the cut edge. For example, in some embodiments, the computing device converts the image to a monochrome image, e.g., black and white, using standard image processing. In such a case, the areas that reflect substantial amounts of light may be identified as corresponding to gypsum material at the surface of the cut edge, while areas that reflect less light or no light may be identified as corresponding to a bubble intersecting the surface of the cut edge. In other embodiments, the computing device uses image processing algorithms to identify certain portions of the image that reflect light but are not at the surface of the cut edge. For example, in some embodiments, the computing device identifies reflections from the interior surface of a bubble and does not include such reflections as part of the surface of the cut edge.

In some embodiments, the frame 155 also includes a pair of clips 158 configured to secure the segment 105 of gypsum panel 100 in place are able to move along a track 157 to allow other portions of the cut edge 108 to be positioned under the camera 152. Such movement can allow a series of images of the cut edge to be made. The computing device 160 can then integrate two or more of the images taken to provide a more robust assessment of the bubble distribution along the cut edge. In some embodiments, this motion along the track is done manually, for example, by an operator moving the clips 158 and segment 105 to a second position. In other embodiments, this motion along the track is done automatically, as by a motor and gear or linear operator that can move the sample a pre-determined distance to take the next image. In some embodiments, this automatic motion and distance is calculated and articulated from instructions provided by the computing device 160. In some embodiments, the range of motion that the clips 158 and segment 105 can travel is a fixed distance, so as to ensure that the image captured by the camera 152 covers at least a portion of the cut edge 108. In some embodiments, the track that the clips 158 and segment 105 travel on have pre-determined stopping points, to allow for the images taken by the camera 152 of different segments 105 to be taken at consistently relative locations. For example, if a first segment 105 with a cut edge 108 having a length of 5 inches is to be imaged, the pre-determined stopping points may be at 1, 2, 3, and 4 inches from the first edge, and at each stopping point, and image can be taken. Then when a second segment 105 is to be measured, this second segment would also be stopped at the same pre-determined stopping points of the first segment for those images to be taken. As such, images from multiple samples can be compared or analysed either manually or computationally to each other.

FIG. 5 shows an image after such image processing, where portions of the image that represent gypsum material at the surface of the cut edge are depicted as white and portions of the image that represent bubbles are depicted as black. In some embodiments, FIG. 5 may be used to determine the percentage of the area of the gypsum core that is occupied by bubbles or the ratio of the area occupied by bubbles to the area occupied by gypsum material.

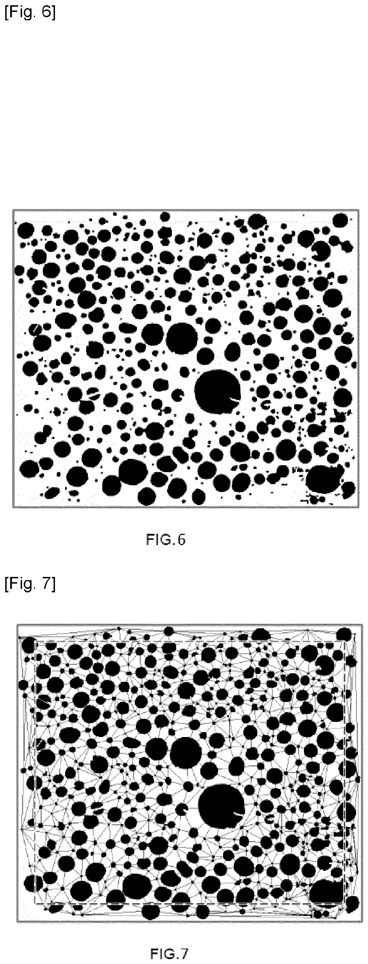

FIGS. 6 and 7 illustrate possible steps to determine other average bubble parameters within the gypsum core. FIG. 6 shows the image of FIG. 5 with all of the partial bubbles around the perimeter of the image removed. The remaining complete bubbles may then be used to calculate a range of bubble diameters and an average bubble diameter.

FIG. 7 illustrates an embodiment of a technique for determining an average wall thickness within the gypsum core. The term wall thickness, as used herein, refers to the minimum thickness of material between two adjacent bubbles. The wall thickness referred to herein may be an estimate rather than an exact quantity. FIG. 7 includes wall thickness lines between each bubble and adjacent surrounding bubbles. The wall thickness lines extend from the respective centres of adjacent pairs of bubbles. Thus, the length of each wall thickness line represents the distance between the respective centres of the adjacent pair of bubbles. Using the wall thickness lines, a value for the wall thickness may be calculated by subtracting the radius of each bubble from the length of the wall thickness line. Because the partial bubbles around the perimeter of the image have been removed, some of the wall thickness measurements around the outer perimeter of FIG. 7 are artificially enlarged, as the wall thickness lines extend between bubbles that are not truly adjacent within the gypsum core or the original image. Accordingly, in some embodiments, wall thickness measurements in the vicinity of the outer perimeter of the image are excluded when determining an average wall thickness of the gypsum core.

In other embodiments, the wall thickness is measured more directly, by identifying and measuring the thickness of gypsum material between adjacent bubbles, rather than using the radius of each bubble. For example, the computing device may measure the thickness of the gypsum material along the wall thickness line between adjacent bubbles or may identify a minimum wall thickness between the bubbles independent of the wall thickness line. Such techniques may account for variations in bubble shape but may also require time and computing power to determine.

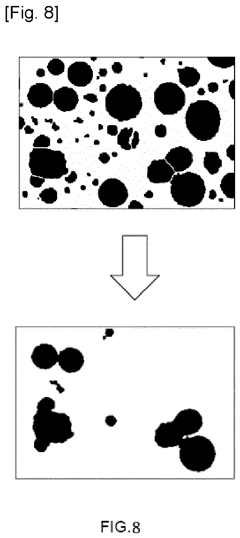

Once the bubbles are identified, the bubbles within the image that are in contact may be determined. For example, each pair of adjacent bubbles in the image that are separated by a wall thickness of zero may be identified as contacting bubbles. Each of the bubbles that contacts at least one other bubble may then be assigned to a set of contacting bubbles. For example, the top of FIG. 8 illustrates an initial image of an area of a gypsum core that includes a plurality of bubbles. After identifying the bubbles within the image, the bubbles in contact with one another are identified. Each of the bubbles in contact with at least one other bubble is then assigned to a set of contacting bubbles, as shown at the bottom of FIG. 8.

Based on the set of contacting bubbles in the image, a measure of bubble contact within the gypsum core is then determined. As set forth above, using the measure of bubble contact within the gypsum core, an operating parameter may then be modified to influence the characteristics of the manufactured gypsum panel. Accordingly, after modifying an identified operating parameter, subsequent gypsum panels may be produced that have a different measure of bubble contact and, likewise, different performance characteristics.

In certain embodiments of the method of analysing a gypsum core as otherwise described herein, the measure of bubble contact is a ratio of a geometric area of the set of contacting bubbles and a geometric area of all the identified bubbles. For example, as shown in FIG. 8, the measure of bubble contact may be the ratio of the area that is shown as black in the bottom image (i.e., the area covered by contacting bubbles) over the area that is shown as black in the top image (i.e., the area covered by all bubbles). Similarly, in some embodiments, the measure of bubble contact is the ratio of the volume of the set of contacting bubbles and the volume of the identified bubbles.

In other embodiments, the measure of bubble contact is a ratio of a geometric area of the set of contacting bubbles and a geometric area of the portion of the image. For example, as shown in FIG. 8, the measure of bubble contact may be the percentage of the bottom image that is shown as black. Likewise, in some embodiments, the measure of bubble contact is the ratio of the volume of the set of contacting bubbles and the volume of the analysed portion of the image.

Still, in other embodiments the measure of bubble contact is a ratio of the number of bubbles in the set of contacting bubbles and the number of bubbles identified in the portion of the image. For example, in some embodiments, the measure of bubble contact is a ratio of the number of bubbles that are in contact with other bubbles and the total number of bubbles in the image.

In certain embodiments of the method of analysing a gypsum core as otherwise described herein, the method includes determining, based on the measure of bubble contact, a proposed operating parameter modification.

In certain embodiments of the method of analysing a gypsum core as otherwise described herein, the method includes transmitting, from the computing device, the measure of bubble contact to a display. For example, gypsum core analysis tool 150 includes a display 168 in data communication with computing device 160. Computing device 160 is operable to transmit certain information to display 168 for outputting the information to a user. For example, after analysing the image cut surface 108, in some embodiments, computing device 160 transmits the measure of bubble contact to display 168 for presentation to a user. In some embodiments, the image itself, as well as other quantities calculated by the computing device may also be presented on the display.

In some embodiments, the display is physically coupled to other components of the gypsum core analysis tool. For example, in some embodiments, the display is disposed on the frame that supports the camera. In other embodiments, the display is physically separated from the other components of the gypsum core analysis tool. For example, in some embodiments, the display is part of a notebook computer, a smartphone, or a tablet.

In other embodiments, the measure of bubble contact is not transmitted to a display. For example, in some embodiments, the computing device uses the measure of bubble contact to determine one or more other values, such as the proposed operating parameter modification, and transmits such other value(s) to a display for presentation to a user, instead of the measure of bubble contact itself.

Further still, in some embodiments, the computing device uses the measure of bubble contact to determine an appropriate operating parameter modification, and automatically modifies the operating parameter within the manufacturing line of the gypsum panels. For example, in response to the measure of bubble contact determined by the computing device, the computing device may automatically send a signal to components of the manufacturing line to modify an operating parameter, such as to reduce the quantity of foam added to the slurry.

In certain embodiments of the method of the gypsum core analysis method as otherwise described herein, the method further includes receiving information from a user. For example, in some embodiments, the method includes receiving a threshold for a gypsum panel characteristic from a user and determining a proposed operating parameter modification based on the threshold received from the user. As one example, in some embodiments, the gypsum core analysis tool requests information from a user that relates to a threshold of the density of the gypsum panel. The computer may then use the received threshold density as a guide for determining a proposed operating parameter modification, and exclude certain options based on the threshold.

In some embodiments, the user information is entered using an input, such as a keyboard, button, joystick, touchscreen, or other input as would be appreciated by those of ordinary skill in the art. In certain embodiments, the input is coupled to the other components of the gypsum core analysis tool. In other embodiments, the input may be remote from the other components. For example, the input may be part of a wireless controller, a notebook computer, a smartphone or a tablet computer.

In another aspect, the disclosure provides a non-transitory computer-readable medium having stored thereon program instructions that upon execution by a processor, cause performance of a set of operations to perform the method of analysing a gypsum core of the disclosure. In another aspect, the disclosure provides a computing device including a processor and a non-transitory computer-readable medium having stored thereon program instructions that upon execution by a processor, cause performance of a set of operations to perform the method of analysing a gypsum core of the disclosure.

In yet another aspect, the disclosure provides a gypsum core analysis tool including a camera configured to capture an image of a region of a cut surface of a gypsum core and computing device. The computing device includes a processor and a non-transitory computer-readable medium having stored thereon program instructions that upon execution by a processor, cause performance of a set of operations to perform the method of analysing a gypsum core of the disclosure.

It will be apparent to those skilled in the art that various modifications and variations can be made to the processes and devices described here without departing from the scope of the disclosure. Thus, it is intended that the present disclosure cover such modifications and variations of this invention provided they come within the scope of the appended claims and their equivalents.

### Embodiments

Embodiment 1. A method of forming a gypsum panel, the method comprising:
forming a porous slurry layer on a receiving surface using a plurality of operating parameters, wherein forming the porous slurry layer includes:
combining a stucco and water in a mixer,
adding foam to the stucco and water,
stirring the stucco, water, and foam in the mixer to form a slurry, and distributing the slurry over the receiving surface;
allowing the porous slurry layer to set to form a gypsum core of a gypsum panel;
forming a cut surface that extends across the gypsum core;
capturing an image of a region of the cut surface;
analyzing the image to identify bubbles intersecting the cut surface;
determining a measure of bubble contact in the gypsum core based on the identified bubbles in the image; and
optionally, based on the measure of bubble contact, modifying a first operating parameter of the plurality of operating parameters for forming the porous slurry layer on the receiving surface.

Embodiment 2. The method of forming a gypsum panel according to embodiment 1, wherein the first operating parameter is the weight percent of water added to the slurry.

Embodiment 3. The method of forming a gypsum panel according to embodiment 1, wherein the first operating parameter is the weight percent of stucco added to the slurry.

Embodiment 4. The method of forming a gypsum panel according to embodiment 1, wherein the first operating parameter is the weight percent of foam added to the slurry.

Embodiment 5. The method of forming a gypsum panel according to embodiment 1, wherein the first operating parameter is the density of the foam.

Embodiment 6. The method of forming a gypsum panel according to embodiment 1, wherein the first operating parameter includes a median bubble size of the foam.

Embodiment 7. The method of forming a gypsum panel according to embodiment 1, wherein the foam includes a surfactant.

Embodiment 8. The method of forming a gypsum panel according to embodiment 7, wherein the first operating parameter is the weight percent of surfactant in the foam.

Embodiment 9. The method of forming a gypsum panel according to embodiment 7, wherein the first operating parameter is the type of surfactant in the foam.

Embodiment 10. The method of forming a gypsum panel according to embodiment 1, wherein the foam is injected into the mixer at a foam injection pressure, and wherein the first operating parameter is the foam injection pressure.

Embodiment 11. The method of forming a gypsum panel according to embodiment 1, wherein the foam is injected into the mixer through a nozzle, and wherein the first operating parameter is a shape of the nozzle.

Embodiment 12. The method of forming a gypsum panel according to embodiment 1, wherein the first operating parameter is a rotational speed of the mixer.

Embodiment 13. The method of forming a gypsum panel according to embodiment 1, wherein forming the porous slurry layer includes adding a first additive to the slurry in the mixer.

Embodiment 14. The method of forming a gypsum panel according to embodiment 13, wherein the first operating parameter is a weight percent of the first additive added to the slurry.

Embodiment 15. The method of forming a gypsum panel according to embodiment 13, wherein the first operating parameter is a composition of the first additive added to the slurry.

Embodiment 16. The method of forming a gypsum panel according to any of embodiments 13 to 15, wherein the first additive is a retarder, fluidizer, or set modifier.

Embodiment 17. The method of forming a gypsum panel according to embodiment 1, wherein distributing the slurry over the receiving surface includes vibrating the receiving surface.

Embodiment 18. The method of forming a gypsum panel according to embodiment 1, wherein the first operating parameter is a vibration speed of the receiving surface.

Embodiment 19. The method of forming a gypsum panel according to any of embodiments 1 to 18, further comprising, while capturing the image of the region of the cut surface, illuminating the region of the cut surface using a light source.

Embodiment 20. The method of forming a gypsum panel according to embodiment 19, wherein the light source is a ring light that surrounds the region of the cut surface.

Embodiment 21. The method of forming a gypsum panel according to any of embodiments 1 to 20, wherein determining the measure of bubble contact in the gypsum core includes:
identifying a set of bubbles each of which is in contact with at least one other bubble; and
determining, based on the set of contacting bubbles, the measure of bubble contact in the gypsum core.

Embodiment 22. The method of forming a gypsum panel according to embodiment 21, wherein the measure of bubble contact is a ratio of a geometric area of the set of contacting bubbles and a geometric area of the identified bubbles.

Embodiment 23. The method of forming a gypsum panel according to embodiment 21, wherein the measure of bubble contact is a ratio of a geometric area of the set of contacting bubbles and a geometric area of the portion of the image.

Embodiment 24. The method of forming a gypsum panel according to embodiment 21, wherein the measure of bubble contact is a ratio of the number of bubbles in the set of contacting bubbles and the number of bubbles identified in the portion of the image.

Embodiment 25. The method of forming a gypsum panel according to any of embodiments 21 to 24, wherein the identified bubbles exclude partial bubbles that intersect an edge of the portion of the image.

Embodiment 26. The method of forming a gypsum panel according to any of embodiments 1 to 25, further comprising determining an average wall thickness between adjacent bubbles in the gypsum core.

Embodiment 27. The method of forming a gypsum panel according to embodiment 26, wherein determining the average wall thickness includes excluding wall thickness measurements between bubbles in a vicinity of the edge of the portion of the image.

Embodiment 28. The method of forming a gypsum panel according to embodiment 21, further comprising determining an operating parameter modification based on a threshold for a gypsum panel characteristic.

Embodiment 29. A method of analyzing a gypsum core, the method comprising:
receiving an image of a region of a cut surface of the gypsum core;
identifying bubbles in a portion of the image;
identifying a set of contacting bubbles each of which is in contact with at least one other bubble; and
determining, based on the set of bubbles, a measure of bubble contact in the gypsum core.

Embodiment 30. The method of analyzing a gypsum core according to embodiment 29, wherein the measure of bubble contact is a ratio of a geometric area of the set of contacting bubbles and a geometric area of the identified bubbles.

Embodiment 31. The method of analyzing a gypsum core according to embodiment 29, wherein the measure of bubble contact is a ratio of a geometric area of the set of contacting bubbles and a geometric area of the portion of the image.

Embodiment 32. The method of analyzing a gypsum core according to embodiment 29, wherein the measure of bubble contact is a ratio of the number of bubbles in the set of contacting bubbles and the number of bubbles identified in the portion of the image.

Embodiment 33. The method of analyzing a gypsum core according to any of embodiments 29 to 32, wherein the identified bubbles exclude partial bubbles that intersect an edge of the portion of the image.

Embodiment 34. The method of analyzing a gypsum core according to any of embodiments 29 to 33, further comprising determining an average wall thickness between adjacent bubbles in the gypsum core.

Embodiment 35. The method of analyzing a gypsum core according to embodiment 34, wherein determining the average wall thickness includes excluding wall thickness measurements between bubbles in a vicinity of the edge of the portion of the image.

Embodiment 36. The method of analyzing a gypsum core according to any of embodiments 29 to 35, further comprising transmitting the measure of bubble contact to a display.

Embodiment 37. The method of analyzing a gypsum core according to any of embodiments 29 to 36, further comprising determining, based on the measure of bubble contact, a proposed operating parameter modification.

Embodiment 38. The method of analyzing a gypsum core according to embodiment 37, further comprising transmitting the proposed operating parameter modification to a display.

Embodiment 39. The method of analyzing a gypsum core according to embodiment 37 or embodiment 38, further comprising receiving, from a user, a threshold for a gypsum panel characteristic; and determining the proposed operating parameter modification based on the threshold received from the user.

Embodiment 40. A non-transitory computer-readable medium having stored thereon program instructions that upon execution by a processor, cause performance of a set of operations to perform the method of any of embodiments 29 to 39.

Embodiment 41. A computing device comprising:
a processor; and
a non-transitory computer-readable medium according to embodiment 40.

Embodiment 42. A gypsum core analysis tool comprising:
a camera configured to capture an image of a region of a cut surface of a gypsum core; and
a computing device according to embodiment 41.

Embodiment 43. The gypsum core analysis too according to embodiment 42, further comprising a light source configured to illuminate the region of the cut surface of the gypsum core.

Embodiment 44. The gypsum core analysis tool according to embodiment 42, wherein the light source is a ring light arranged around an optical axis of the camera.

Embodiment 45. The gypsum core analysis tool according to any of embodiments 42 to 44, further comprising a frame that holds the camera and is configured to hold a section of a gypsum panel with the region of the cut surface positioned within the field of view of the camera.

## Claims

1. A method of forming a gypsum panel, the method comprising: forming a porous slurry layer on a receiving surface using a plurality of operating parameters, wherein forming the porous slurry layer includes:
combining a stucco and water in a mixer,
adding foam to the stucco and water,
stirring the stucco, water, and foam in the mixer to form a slurry, and
distributing the slurry over the receiving surface;
allowing the porous slurry layer to set to form a gypsum core of a gypsum panel;
forming a cut surface that extends across the gypsum core;
capturing an image of a region of the cut surface;
analyzing the image to identify bubbles intersecting the cut surface;
determining a measure of bubble contact in the gypsum core based on the identified bubbles in the image; and
based on the measure of bubble contact, modifying a first operating parameter of the plurality of operating parameters for forming the porous
slurry layer on the receiving surface.

2. The method of forming a gypsum panel according to claim 1, wherein the first operating parameter is the weight percent of at least one of water, stucco or foam added to the slurry.

3. The method of forming a gypsum panel according to claim 1, wherein the first operating parameter includes the density of the foam, or a median bubble size of the foam.

4. The method of forming a gypsum panel according to claim 1, wherein the first operating parameter is a type of surfactant in the foam, or a weight percent of surfactant in the foam.

5. The method of forming a gypsum panel according to claim 1, wherein the foam is injected into the mixer at a foam injection pressure, and wherein the first operating parameter is the foam injection pressure.

6. The method of forming a gypsum panel according to claim 1, wherein the foam is injected into the mixer through a nozzle, and wherein the first operating parameter is a shape of the nozzle.

7. The method of forming a gypsum panel according to claim 1, wherein the first operating parameter is a rotational speed of the mixer.

8. The method of forming a gypsum panel according to claim 1, wherein the first operating parameter is a weight percent or composition of a first additive added to the slurry.

9. The method of forming a gypsum panel according to any of claims 1 to 8, wherein determining the measure of bubble contact in the gypsum core includes: identifying a set of bubbles each of which is in contact with at least one other bubble; and determining, based on the set of contacting bubbles, the measure of bubble contact in the gypsum core.

10. A computer implemented method of analyzing a gypsum core, the method comprising:
receiving an image of a region of a cut surface of the gypsum core;
identifying bubbles in a portion of the image;
identifying a set of contacting bubbles each of which is in contact with at least one other bubble; and
determining, based on the set of bubbles, a measure of bubble contact in
the gypsum core.

11. The method of analyzing a gypsum core according to claim 10, wherein the measure of bubble contact is a ratio of a geometric area of the set of contacting bubbles and a geometric area of the identified bubbles.

12. The method of analyzing a gypsum core according to claim 10, wherein the measure of bubble contact is a ratio of a geometric area of the set of contacting bubbles and a geometric area of the portion of the image.

13. The method of analyzing a gypsum core according to claim 10, wherein the measure of bubble contact is a ratio of the number of bubbles in the set of contacting bubbles and the number of bubbles identified in the portion of the image.

14. The method of analyzing a gypsum core according to any of claims 10 to 13, further comprising determining, based on the measure of bubble contact, a proposed operating parameter modification, and, optionally, transmitting the proposed operating parameter modification to a display.

15. A non-transitory computer-readable medium having stored thereon program instructions that upon execution by a processor, cause performance of a set of operations to perform the method of any of claims 10 to 14.

16. A computing device comprising:
a processor; and
a non-transitory computer-readable medium according to claim 15.

17. A gypsum core analysis tool comprising:
a camera configured to capture an image of a region of a cut surface of a gypsum core; and
a computing device according to claim 16.
